# FASCICULE DE BREVET EUROPEEN

(11) **EP 4 171 971 B1**
(45) Date de publication et mention de la délivrance du brevet: **19.02.2025**
(21) Numéro de dépôt: 21745362.0
(22) Date de dépôt: 24.06.2021
(51) Int. Cl.: B60C 11/00, B60C 1/00

(54) **PNEUMATIQUE COMPORTANT UNE BANDE DE ROULEMENT OPTIMISÉE EN ADHÉRENCE SUR SOL MOUILLÉ A L'ÉTAT USÉ**
REIFEN MIT EINER LAUFFLÄCHE, DIE FÜR DIE GRIFFIGKEIT AUF NASSBODEN IM ABGENUTZEN ZUSTAND OPTIMIERT IST
TYRE COMPRISING A TREAD OPTIMISED FOR GRIP ON WET GROUND IN THE WORN CONDITION

(30) Priorité: 26.06.2020 FR 2006739
(43) Date de publication de la demande: 03.05.2023
(73) Titulaire: COMPAGNIE GENERALE DES ETABLISSEMENTS MICHELIN, 63000 Clermont-Ferrand (FR)
(72) Inventeur: CAREME, Christopher, 63040 Clermont-Ferrand Cedex 9 (FR)
(74) Mandataire: M.F.P. Michelin
(86) Numéro de dépôt international: PCT/FR2021/051169
(87) Numéro de publication internationale: WO 2021/260335

(56) Documents cités:
- EP-A1- 2 565 056
- EP-A1- 2 865 543
- EP-A1- 3 508 354
- DE-A1- 19 731 525
- US-A1- 2014 150 944

## Description

### Domaine technique

La présente invention concerne un pneumatique pour véhicule automobile dont les performances en adhérence longitudinale sur sol mouillé, à l'état usé, sont améliorées. L'invention est plus particulièrement adaptée pour un pneumatique radial destiné à équiper un véhicule de tourisme ou une camionnette.

Par pneumatique usé, on entend des pneumatiques qui ont eu une vie de service normal, jusqu'à se rapprocher de la limite légale des témoins d'usure positionnés sur les flancs des pneumatiques.

La légalité dont il est question ici est relative aux règlements de sécurité des pneumatiques R30, et R54 de l'UNECE (Organisation des Nations Unies pour le Conseil Economique Européen). Cette organisation regroupe la plupart des pays européens, en particulier ceux de l'Union Européenne, mais aussi des pays en dehors de l'Europe tels que le Japon, la Thaïlande ou l'Australie. Ces pays ont validé un accord de reconnaissance mutuelle des homologations réglementaires des pneumatiques. Autrement dit, un pneumatique homologué réglementairement dans l'un des pays de l'UNECE est validé également dans tous les autres pays de l'organisation où ces règlements sont en vigueur.

Avant toute commercialisation dans les pays de l'UNECE, un pneumatique pour véhicules tourisme ou camionnette doit se conformer aux requis réglementaires sur la sécurité selon les règlements R30, R54 et aux requis sur les seuils de performances selon le règlement R117. Les témoins d'usure dans les sillons ou dans les entailles transversales de la bande de roulement, ainsi que leur repérage sur les flancs des pneumatiques sont des requis de ces règlements. Le règlement sur les seuils de performances R117 exige que les pneumatiques aient un niveau de performances supérieur à des seuils fixés par le règlement en ce qui concerne la résistance au roulement, l'adhérence sur sols mouillé et enneigé, et le bruit de roulement.

A titre d'illustration, un pneumatique tourisme pour être commercialisé dans les pays de l'UNCE doit avoir une valeur de résistance au roulement inférieure ou égale à 6kg/t, comme le requiert le règlement R117. Ce même pneumatique doit avoir un freinage sur sol mouillé supérieur d'au moins de 10% par rapport à pneumatique témoin fixé par le règlement R117. Les méthodes et paramètres de ces tests sont également définis par ce règlement.

Le règlement sur les seuils de performance R117 s'applique aux pneumatiques neufs pour leur commercialisation sur le marché de l'UNECE, mais la question se pose de l'effectivité de ces exigences en fonction de l'usure des pneumatiques.

L'invention ici est relative à la pérennité de la performance d'adhérence sur sol mouillé, c'est-à-dire à la capacité du pneumatique à être encore conforme aux seuils réglementaires même pour un pneumatique proche de l'usure légale, selon une méthode de test appropriée.

### Définitions

Par convention, un repère (O, XX', YY', ZZ'), dont le centre O coïncide avec le centre du pneumatique, les directions circonférentielles XX', axiale YY', et radiale ZZ' désignent respectivement une direction tangente à la surface de roulement du pneumatique selon le sens de rotation, une direction parallèle à l'axe de rotation du pneumatique, et une direction orthogonale à l'axe de rotation du pneumatique.

Par radialement intérieur, respectivement radialement extérieur, on entend plus proche, respectivement plus éloigné de l'axe de rotation du pneumatique.

Par axialement intérieur, respectivement axialement extérieur, on entend plus proche, respectivement plus éloigné du plan équatorial du pneumatique, le plan équatorial du pneumatique étant le plan passant par le milieu de la bande de roulement du pneumatique et perpendiculaire à l'axe de rotation du pneumatique.

Un pneumatique comprend un sommet, destinée à venir en contact avec un sol par l'intermédiaire d'une bande de roulement, dont les deux extrémités axiales sont reliées par l'intermédiaire de deux flancs à deux bourrelets assurant la liaison mécanique entre le pneumatique et la jante sur laquelle il est destiné à être monté.

De façon générale, l'homme du métier définit la bande de roulement d'un pneumatique principalement à l'aide des caractéristiques de conception suivantes : la surface de roulement permettant de définir la largeur totale de la bande de roulement, et la sculpture caractérisée par un taux d'entaillement volumique.

Par « surface de roulement » de la bande de roulement, on entend la surface qui regroupe l'ensemble des points du pneumatique qui vont entrer en contact avec un sol dans des conditions usuelles de roulage. Ces points qui vont entrer en contact avec le sol appartiennent aux faces de contact des blocs. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et à son code vitesse. Ces conditions d'utilisation peuvent aussi être dites « conditions nominales » ou « conditions d'usage ».

La largeur totale de la bande de roulement est la distance axiale entre les extrémités axiales de la surface de roulement, symétriques par rapport au plan équatorial du pneumatique. Sur un plan pratique, une extrémité axiale de la surface de roulement ne correspond pas nécessairement à un point clairement défini. Sachant que la bande de roulement est délimitée extérieurement, d'une part, par la surface de roulement et, d'autre part, par deux surfaces de raccordement avec deux flancs reliant ladite bande de roulement à deux bourrelets destinés à assurer la liaison avec une jante de montage, une extrémité axiale peut être alors définie mathématiquement comme la projection orthogonale, sur la bande de roulement, d'un point théorique d'intersection entre la tangente à la surface de roulement, dans la zone d'extrémité axiale de la surface de roulement, et la tangente à la surface de raccordement, dans la zone d'extrémité radialement extérieure de la surface de raccordement. La largeur totale de la bande de roulement correspond sensiblement à la largeur axiale de la surface de contact lorsque que le pneumatique est soumis aux conditions de charge et de pression recommandées.

Par mélange élastomérique, on entend un matériau élastomérique obtenu par mélangeage de ses divers constituants. Un mélange élastomérique comprend classiquement une matrice élastomérique avec au moins un élastomère diénique de type caoutchouc naturel ou synthétique, au moins une charge renforçante de type noir de carbone et/ou de type silice, un système de réticulation le plus souvent à base de soufre, et des agents de protection.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Par l'expression « partie en poids pour cent parties en poids d'élastomère » (ou pce), il faut entendre au sens de la présente invention, la part, en masse pour cent parties d'élastomère présent dans la composition de mélange considérée.

Le choix du matériau constitutif de la bande de roulement est une étape essentielle de la conception d'un pneumatique. Généralement, c'est un mélange élastomérique caractérisé par ses propriétés dynamiques, telles que sa perte viscoélastique Tgδ (tangente delta) et/ou son module complexe de cisaillement dynamique G*.

La perte viscoélastique, Tgδ, et le module de cisaillement complexe G* sont généralement déterminées lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est-à-dire cuit jusqu' à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G'', et la perte dynamique Tgδ, égale au rapport G''/G'. La température de transition vitreuse Tg est la température à laquelle la perte dynamique Tgδ atteint un maximum lors du balayage en température. La valeur de G* mesurée à 23°C est représentative de la rigidité du matériau caoutchoutique, c'est-à-dire de sa résistance à la déformation élastique.

### Technique antérieure

De manière connue, la bande de roulement d'un pneumatique est pourvue d'une sculpture comprenant notamment des éléments de sculpture ou blocs élémentaires délimités par diverses rainures principales, longitudinales, transversales ou encore obliques, les blocs élémentaires pouvant comporter diverses incisions ou lamelles plus fines. Les rainures constituent des canaux destinés à évacuer l'eau lors d'un roulage sur sol mouillé et définissent les bords des éléments de sculpture.

A mesure qu'un pneumatique s'use, le volume de la bande de roulement diminue du fait de la perte de matière liée au frottement avec la surface de la route. Quand le pneumatique est neuf, la bande de roulement a son épaisseur maximale. Lorsque le pneumatique s'use, la hauteur des blocs élémentaires de la sculpture diminue, et la raideur de ces blocs augmente. L'augmentation de raideur de blocs élémentaires de sculpture entraîne une diminution de certaines performances du pneumatique, comme l'adhérence sur sol mouillé, même quand la hauteur des blocs de sculpture est au niveau du témoin d'usure légal.

Il est donc nécessaire de ne pas se limiter à tester les pneumatiques à l'état neuf mais de réaliser aussi des tests de performance à l'état usé, notamment sur sol mouillé.

A titre d'exemple, le brevet EP2163403B1, propose une bande de roulement comprenant deux couches de matériaux superposées radialement, et posées extérieurement sur le sommet d'un pneumatique. L'interface entre les deux couches composant la bande de roulement est ondulée. La sculpture de la bande de roulement s'adapte en fonction de l'usure du pneumatique pour laisser apparaître d'autres découpures.

Dans la demande internationale WO2004/096583A1, un pneumatique avec une bande de roulement multicouche, et son procédé de fabrication sont divulgués. La bande .de roulement comprend une première couche interne, radialement intérieure à une couche externe destinée à être en contact avec un sol. D'une part, le module élastique d'extension-compression de la couche interne est supérieur à celui de la couche externe, et d'autre part la couche de la bande de roulement radialement intérieur a un profile avec des protubérances radialement orientées extérieurement étalées sur toute la largeur de la bande de roulement. Cette divulgation explique qu'un tel pneumatique monté sur un véhicule améliore le comportement du véhicule notamment lors des prises de virages.

Dans le document DE19731525A1, on divulgue une bande de roulement multicouche d'au moins deux couches superposées, de telle manière que leur interface commune se trouve au-dessus de la profondeur de profil minimale, de sorte que la partie inférieure de ces couches, dans une phase ultérieure de la vie du pneumatique entre en contact avec le sol.

La durée de vie des pneumatiques est variable en fonction de leurs conditions d'usage. Mais, même dans des conditions d'usage sévère, c'est-à-dire de roulages à accélérations latérales du véhicule élevées, cette durée de vie est souvent supérieur e à 10 000 kms.

Pour limiter les coûts liés à l'obtention d'un pneumatique usé, il est d'usage de raboter la bande de roulement c'est-à-dire de diminuer par découpe ou brossage l'épaisseur de la bande de roulement du pneumatique d'une hauteur correspondant à celle qui serait obtenue par usure en roulage du pneumatique. A cet effet, le brevet FR3059421 divulgue une méthode de rabotage pour la préparation des pneumatiques pour des tests à l'état usé.

Les inventeurs se sont donnés pour objectif de réaliser un pneumatique qui conserve une performance en adhérence sur sol mouillé tout le long de sa vie sans dégrader pour autant les autres performances tel que la résistance au roulement.

### Exposé de l'invention

Ce but a été atteint par un pneumatique comportant une armature de sommet, une sous-couche, et une bande de roulement multicouche formée de trois couches de mélanges élastomériques M1, M2, M3, dont la couche la plus radialement extérieure M3 est destinée à entrer en contact avec un sol par l'intermédiaire d'une surface de roulement :
- l'armature de sommet étant disposée radialement intérieurement à la bande de roulement multicouche;
- la sous-couche étant disposée radialement extérieurement à l'armature de sommet et radialement intérieurement à la bande de roulement multicouche, et s'étendant sur toute la largeur axiale de l'armature de sommet ;
- la bande de roulement multicouche comprenant une première couche M1 disposée radialement extérieurement à la sous-couche et s'étendant axialement sur toute ou partie de la largeur axiale de la sous-couche au moins en tronçons ;
- la bande de roulement comprenant également une couche M3 la plus radialement extérieure dotée d'une surface de roulement ;
- les mélanges élastomériques des couches respectivement M1, M2, M3 ayant respectivement un module de rigidité de cisaillement, G'_M1, G'_M2, G'_M3, et ayant respectivement une perte viscoélastiques Tgδ_M1, Tgδ_M2, Tgδ_M3, mesurés à 23°C à 10 Hz et sous une déformation de cisaillement alterné de 10% du matériau de chaque couche ;
- la bande de roulement multicouche comporte une couche intermédiaire M2 disposée radialement extérieurement à la première couche M1 en contact avec elle, et radialement intérieurement avec la couche la plus radialement extérieure M3, s'étendant axialement au moins en tronçons le long de la première couche M1 ;
- le rapport G'_M1/G'_M2 est compris dans l'intervalle [7; 25];
- la perte viscoélastique Tgδ_M2 du mélange élastomérique de la couche intermédiaire M2, et la perte viscoélastique Tgδ_M3 du mélange élastomérique de la couche M3 la plus radialement extérieure, sont reliées par la relation : (Tgδ_M2-Tgδ_M3)/Tgδ_M2 ≥ 20%
- le rapport de l'épaisseur radiale de la couche M3 la plus radialement extérieure divisée par l'épaisseur radiale de la couche intermédiaire M2, Epaisseur_M3/Epaisseur_M2,est compris dans l'intervalle [3; 10], lesdites épaisseurs étant mesurées sur l'axe de symétrie d'un plan méridien du pneumatique.

Le principe de l'invention est de faire un gain en adhérence sur sol mouillé en contrepartie d'une hausse en résistance au roulement dans des proportions maîtrisées, car le pneumatique de l'invention doit être conforme à la réglementation sur les seuils de performances y compris en résistance au roulement. Pour cela, l'ajout de la couche intermédiaire M2 optimisée en adhérence à la place d'une partie du volume de la couche la plus radialement extérieure M3, optimisée en résistance au roulement, engendre un nouvel équilibre des performances. Après usure de la couche M3 de la bande de roulement, le pneumatique dispose encore d'un fort potentiel adhérence sur sol mouillé avec la couche intermédiaire M2. De fait, le pneumatique de l'invention, pendant toute sa durée d'utilisation garde potentiellement une performance adhérence sur sol mouillé conforme à la réglementation.

Selon l'invention, la bande de roulement multicouche comporte une couche intermédiaire M2 disposée radialement extérieurement à la première couche M1 en contact avec elle, et radialement intérieurement avec la couche la plus radialement extérieure M3, s'étendant axialement au moins en tronçons le long de la première couche M1.

La couche intermédiaire M2 est optimisée en adhérence sur sol mouillé avec une dissipation viscoélastique relativement forte en comparaison de celle du mélange de la couche la plus radialement extérieure M3. A titre d'illustration, si la perte viscoélastique du mélange de la couche intermédiaire M2 est 0,25, alors pour la couche la plus radialement extérieure M3, la perte viscoélastique sera de l'ordre de 0,17. La couche intermédiaire M2 est souple au sens où sa rigidité de cisaillement est relativement faible au regard des rigidités des matériaux adjacents. La forte hystérèse conjuguée à la faible rigidité du mélange de la couche intermédiaire M2 vont dans le sens d'améliorer l'adhérence sur sol mouillé.

A titre d'exemple, le module de rigidité de cisaillement du mélange de la première couche M1 pourrait être de l'ordre de 25 Mpa, et celui du mélange de la couche intermédiaire M2 de l'ordre de 1,7 Mpa. Avec de telles valeurs, le mélange de la couche M1 est dite rigide par rapport à celui de la couche intermédiaire M2.

Le phénomène d'adhérence du pneumatique sur un sol mouillé se déroule en trois étapes. La première étape consiste à assécher le sol par évacuation de l'eau grâce à la sculpture de la bande de roulement, puis une phase de contact avec le sol par adhésion et indentation. Et c'est précisément dans la phase indentation que les aspérités du sol s'accrochent à la couche de mélange pour s'opposer au mouvement. Plus l'hystérèse du mélange est importante, et plus l'opposition au mouvement est amplifiée.

Pour obtenir le compromis de performances visé, selon l'invention, les rigidités et l'hystérèse des couches de mélanges de la bande de roulement M1, M2, et M3 vérifient les relations suivantes :
a. le rapport G'_M1/G'_M2 est compris dans l'intervalle [7; 25];
b. la perte viscoélastique Tgδ_M2 du mélange élastomérique de la couche intermédiaire M2, et la perte viscoélastique Tgδ_M3 du mélange élastomérique de la couche la plus radialement extérieure M3 la plus radialement extérieure, sont reliées par la relation : (Tgδ_M2 - Tgδ_M3)/ Tgδ_M2≥ 20%.

La première relation (a) signifie que la première couche M1 doit être très rigide au regard de la couche intermédiaire M2. La couche M1 n'est jamais en contact avec le sol, d'une part elle participe à la rigidification de la bande de roulement, utile pour générer des poussées de dérive suffisantes, et d'autre part du fait de sa grande rigidité, lors de la fabrication elle est le support de pose de la couche intermédiaire M2 qui est relativement "molle". La pose de la couche intermédiaire M2 dans ces conditions permet d'avoir son contour radialement extérieur parallèle au profil axial du moule. Le profil axial du moule est défini de manière à obtenir une répartition uniforme des pressions verticales dans l'aire de contact. L'uniformité des pressions de contact est nécessaire pour obtenir une usure régulière de la bande de roulement dans la direction axiale. La couche intermédiaire M2, après usure de la couche la plus radialement extérieure M3 est destinée à être en contact avec le sol, et son profil radialement extérieur parallèle au profil axial du moule garantit donc l'obtention d'une usure régulière. Par ailleurs, les pénétrations entre les couches sont limitées avec la couche première M1 en support de pose.

Selon l'invention, le rapport G'_M1/G'_M2 est compris dans l'intervalle [7; 25], ce qui signifie que la rigidité de cisaillement de la première couche M1 est au moins sept fois supérieur à celle de la couche intermédiaire M2 pour commencer à percevoir les effets de l'invention. Cependant, au-delà d'un rapport de rigidité de cisaillement, G'_M1/G'_M2 supérieur à 25, l'effet se tasse asymptotiquement.

Quant à la deuxième relation (b) sur la perte viscoélastique, elle indique l'écart d'hystérèse nécessaire pour percevoir le gain du potentiel d'adhérence du mélange de la couche intermédiaire M2 qui est destinée à venir en contact avec le sol, en regard de la couche la plus radialement extérieure M3. Autrement dit, un écart relatif d'au moins 20% entre les pertes viscoélastiques des mélanges élastomériques des deux couches, est nécessaire pour commencer à percevoir les effets de l'invention.

Le lien entre les rigidités et les hystérèses des couches de la bande de roulement M1, M2, et M3 étant établies, il s'agit maintenant d'établir les relations géométriques entre ces couches. Encore selon l'invention le rapport de l'épaisseur radiale de la couche la plus radialement extérieure M3 la plus radialement extérieure divisée par l'épaisseur radiale de la couche intermédiaire M2, Epaisseur_M3/EpaisseurM2, est compris dans l'intervalle [3; 10], lesdites épaisseurs étant mesurées sur l'axe de symétrie d'un plan méridien du pneumatique.

Compte tenu de l'axisymétrie du pneumatique autour de son axe de rotation, le volume d'une couche est directement proportionnel à son épaisseur radiale dans un plan méridien. La distribution des volumes des couches de la bande de roulement M1, M2, et M3 est le deuxième levier à combiner avec les propriétés mécaniques et hystérétiques des couches pour parvenir à l'invention. La couche M3 de la bande de roulement optimisée en hystérèse représente le plus grand volume. L'invention fonctionne si la couche intermédiaire M2 a un volume supérieur ou égal au dixième du volume de la couche la plus radialement extérieure M3, et inférieur ou égal au tiers de ce volume.

Si le volume de la couche intermédiaire M2 est inférieur au dixième du volume de la couche M3, alors le gain en adhérence sur sol mouillé n'est pas dans ce cas significatif. Inversement, si la couche intermédiaire M2 est supérieure au tiers du volume de la couche la plus radialement extérieure M3, alors la dégradation de la résistance au roulement devient prohibitive.

La combinaison des caractéristiques essentielles de l'invention, décrites plus haut, permettent de réaliser un pneumatique avec une bande de roulement multicouche permettant la pérennisation de la performance d'adhérence sur sol mouillé. Autrement dit, grâce à l'invention, la performance d'adhérence sur sol mouillé ne se dégrade quand le pneumatique s'use. Nous pouvons maintenant examiner les autres caractéristiques et les modes de réalisation de l'invention.

Avantageusement, le rapport du module de rigidité de cisaillement du mélange élastomérique de la première couche M1, divisé par le module de rigidité de cisaillement du mélange élastomérique de la couche radialement la plus extérieure M3, G'_M1/G'_M3 est compris dans l'intervalle [7; 25]. La couche M3 de la bande de roulement est destinée à être en contact avec le sol quand le pneumatique est neuf et dispose du plus grand volume parmi les trois couches. Le compromis des performances plaide pour une couche la plus radialement extérieure M3 avec une faible hystérèse et une rigidité de cisaillement du même ordre de grandeur que pour la deuxième couche intermédiaire M2.

Préférentiellement, le rapport G'_M1/G'_M3 est compris dans l'intervalle [6; 22], de même le rapport G'_M1/G'_M2 est compris dans l'intervalle [6; 22]. La différence de propriétés mécaniques entre les couches M2 et M3 se situent principalement au niveau de l'hystérèse, mais en termes de rigidités, les modules de cisaillement sont du même ordre de grandeur en comparaison du mélange de la première couche M1.

Encore préférentiellement, le module de rigidité de cisaillement du mélange élastomérique de la sous-couche est inférieur ou égal à 1.5 MPa. La bande de roulement multicouche se raccorde à une sous couche dite "molle", en regard de la rigidité de cisaillement du mélange élastomérique de la première couche M1.

Avantageusement, la perte viscoélastique Tgδ_M2 du mélange élastomérique de la couche intermédiaire M2 est supérieure ou égale à 0.2, et encore plus avantageusement, la perte viscoélastique Tgδ_M2 du mélange élastomérique de la couche intermédiaire M2, et la perte viscoélastique Tgδ_M3 du mélange élastomérique de la couche la plus radialement extérieure M3, sont reliées par la relation : (Tgδ_M2 - Tgδ_M3)/Tgδ_M2 ≥ 30%. L'écart relatif des pertes viscoléastiques des mélanges élastomériques des couches M2 et M3 sont dans un rapport supérieur à 30%.

Préférentiellement, le module de rigidité de cisaillement G'_M1 du mélange élastomérique de la première couche M1 est supérieur à 7 MPa, et encore plus préférentiellement, le module de rigidité de cisaillement G'_M1 du mélange élastomérique de la première couche M1 est supérieur ou égal à 12 MPa.

Pour le bon fonctionnement de l'invention, les rigidités des couches de la bande de roulement sont corrélées. La première couche M1 a la plus grande rigidité, avec une valeur au moins de 7 Mpa, et préférentiellement supérieure ou égale à 12 Mpa.

Avantageusement, le profil raboté de la bande de roulement étant par convention, défini tel que la hauteur de sculpture résiduelle après rabotage soit de 2mm sur toute la largeur axiale de la bande de roulement, l'écart maximal Emax étant la distance radiale entre le profil raboté de la bande de roulement, et le profil radialement extérieur de la première couche M1 caractérisé en ce que l'écart maximal Emax est constant à ± 5 mm sur au moins une portion centrale de la bande de roulement.

Dans un premier mode de réalisation, les sillons de la bande de roulement étant les rainures les plus profondes de la sculpture, le matériau apparaissant en fond de sillon est le même que le matériau constitutif de la couche la plus radialement extérieure M3 de la bande de roulement.

Dans un deuxième mode de réalisation, la couche intermédiaire M2 disposée radialement extérieurement à la première couche M1, et en contact radialement intérieurement avec la couche la plus radialement extérieure M3, s'étend axialement en continue le long de la première couche M1.

Dans un troisième mode de réalisation, la bande de roulement comportant des blocs de sculpture séparés par des sillons orientés essentiellement circonférentiellement, la première couche M1 est, axialement en regard de certains blocs de sculpture, prolongée radialement vers l'extérieur par au moins un élément renforçant s'étendant radialement de la surface radialement extérieure de la première couche M1 vers l'extérieur de la bande de roulement jusqu'à une hauteur radiale supérieure à 75% de l'épaisseur radiale de la bande de roulement, ledit élément renforçant étant de largeur axiale variable, depuis une valeur maximale inférieure à 50% de la largeur axiale dudit bloc de sculpture, ladite largeur axiale allant en décroissant lorsque l'on se déplace radialement vers le haut.

### Description des Figures

La présente invention sera mieux comprise à la lecture de la description détaillée de modes de réalisation pris à titre d'exemples nullement limitatifs et illustrés par les dessins annexés sur lesquels :
[Fig 1] La figure 1 montre une coupe méridienne schématique d'un pneumatique conforme à un premier mode de réalisation de l'invention.
[Fig 2] La figure 2 montre sur une coupe méridienne, la cinétique d'usure du pneumatique où les figures 2-A, 2-B, 2-C représentent différents états d'usure du pneumatique, selon le premier mode de réalisation de l'invention.
[Fig 3] La figure 3 montre une coupe méridienne schématique d'un pneumatique conforme à un deuxième mode de réalisation de l'invention.
[Fig 4] La figure 4 montre une coupe méridienne schématique d'un pneumatique conforme à un troisième mode de réalisation de l'invention.

### Description détaillée de l'invention

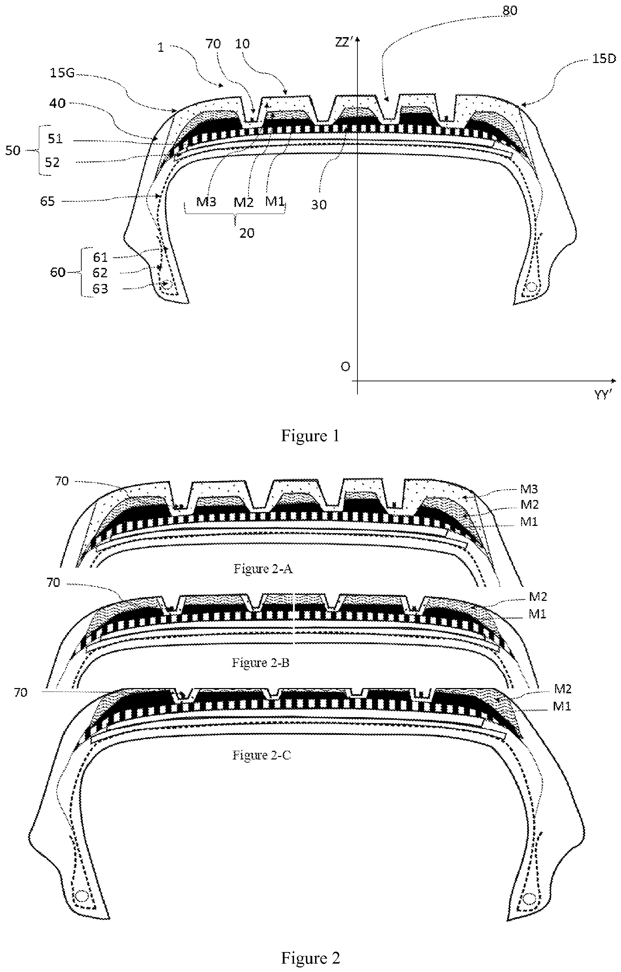

Sur la figure 1, il est représenté un pneumatique de référence générale 1 comportant une armature de sommet 50 radialement intérieure à armature carcasse 60, une sous-couche 30, et une bande de roulement multicouches 20 formée des couches M1, M2, M3, dont la couche la plus radialement extérieure M3 est destinée à entrer en contact avec un sol par l'intermédiaire d'une surface de roulement 10 :
- l'armature de carcasse 60 radialement la plus intérieure comprend au moins une couche de carcasse, représentée sur la figure 1 en traits discontinus. La couche de carcasse est formée de renforts enrobés par un mélange élastomérique. La couche de carcasse 60 comprend une partie principale 61, reliant les deux bourrelets 65 entre eux et s'enroulant dans chaque bourrelet, de l'intérieur vers l'extérieur du pneumatique autour d'un élément de renforcement circonférentiel le plus souvent métallique appelé tringle 63, pour former un retournement 62. Les renforts métalliques d'une couche de carcasse sont sensiblement parallèles entre eux et forment, avec la direction circonférentielle, un angle compris entre 85° et 95°.
- l'armature de sommet 50 est disposée radialement extérieurement à l'armature de carcasse 60 et radialement intérieurement à la bande de roulement multicouche 20, et est formée notamment de deux couches de sommet (51, 52) constitués de renforts métalliques enrobés dans un mélange élastomérique.
- la sous-couche 30 est disposée radialement extérieurement à l'armature de sommet 50 et radialement intérieurement à la bande de roulement multicouches 20, et s'étend sur toute la largeur axiale de l'armature de sommet 50. La sous couche 30 est représentée sur la figure 1, par un motif formé de hachures verticales de couleurs blanches et noires.

Plus précisément, les trois couches de mélanges M1, M2, et M3 de la bande de roulement 20 sont radialement superposées sur la sous couche 30, et orientées radialement vers l'extérieur. La première couche de mélange élastomérique M1 est représentée sur la figure 1 par un fonds noir, et est posé la plus radialement intérieurement sur la sous couche 30. La deuxième couche intermédiaire M2 est radialement extérieurement posée sur la première couche M1. Sur la figure 1, la couche intermédiaire M2 est représentée par un motif en forme de vaguelettes. Enfin, la troisième couche la plus radialement extérieure M3 posée radialement extérieurement sur la couche intermédiaire M2 est représentée par un motif à fonds clair avec des points noirs. Cette couche, la plus radialement extérieure M3, comprend la surface de roulement 10 et est destinée à être en contact avec un sol quand le pneumatique est à l'état neuf.

Dans le mode de réalisation de la figure 1, la bande de roulement 20 comprend également des sillons 80 orientés principalement circonférentiellement et déterminent des blocs de sculpture successifs dans la direction axiale depuis l'épaule 15G à l'épaule 15D. Chaque sillon 80 est délimité radialement vers l'intérieur par un fond de sillon. La couche la plus radialement extérieure M3 s'étend de façon continue sur toute la largeur axiale de la bande de roulement en passant par le fond des sillons, tandis que les couches M2, et M3 sont discontinues. Dans certains fonds de sillons, se trouve un indicateur 70 de l'état d'usure de la bande de roulement. Cet indicateur se prolongement radialement vers l'extérieure depuis le fond du sillon sur une hauteur de 1.6 mm.

La figure 2 représente des états d'usure successifs du pneumatique, 2-A, 2-B et 2-C. La figure 2-A montre le pneu neuf avec la bande de roulement constituée des trois couches de mélange élastomérique M1, M2, M3. Sur la figure 2-B, la couche la plus radialement extérieure M3 est entièrement usée, et la couche intermédiaire M2 vient directement en contact avec le sol. Le pneumatique dispose encore d'un potentiel d'usage, les témoins d'usure 70 ayant une hauteur radiale inférieure à celle de la couche intermédiaire M2. Sur la figure 2-C, le pneumatique est usé. La hauteur de la bande de roulement est au niveau de l'indicateur d'usure 70.

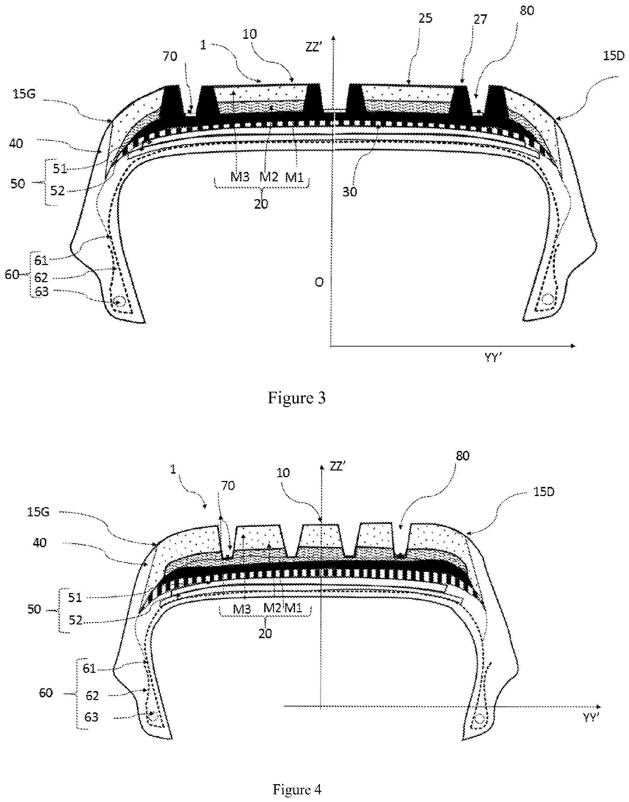

La figure 3 représente le schéma d'un pneumatique d'un deuxième mode de réalisation de l'invention dans un plan méridien où la première couche M1 de la bande de roulement se prolonge radialement extérieurement sous la forme d'un trapèze 27 sur la surface de roulement 10 de manière à border axialement les sillons 80 de part et d'autre. En parcourant la bande de roulement depuis l'extrémité 15G vers l'extrémité 15D, chaque bloc de sculpture délimité par les sillons 80 sont bordés par les prolongements de la première couche M1 sous forme de trapèze 27 de part et d'autre. Les blocs situés aux extrémités 15G et 15D ne sont bordés que du côté orienté vers le centre de la bande de roulement.

La figure 4 montre le troisième mode de réalisation de l'invention, qui se caractérise par l'utilisation de trois couches M1, M2 et M3 continues sur toute la largeur du sommet.

Dans d'autres modes de réalisation, non représentés ici, le pneumatique peut contenir une armature de frettage comprenant une ou deux couches de frettage, radialement extérieurement superposées sur l'armature de sommet 50. Chaque couche de frettage est formée de renforts parallèles entre eux, en faisant avec la direction circonférentielle, des angles au plus égaux à 2.5°.

### Essais

L'invention a été plus particulièrement étudiée pour un pneumatique tourisme de désignation normalisée, selon l'ETRTO (Organisation Technique Européenne pour les Jantes et les Pneumatiques), 245/45 R18 100W. Pour cette dimension une version conforme au premier mode de réalisation de l'invention a été réalisée, comparée à un pneu classique de l'état de l'art avec une bande de roulement monocouche.

Les couches M1, M2, et M3 de la bande de roulement sont caractérisées par leurs propriétés dynamiques et géométriques regroupées dans le tableau qui suit :

**[Tableau 1]**

| | Epaisseur radiale (mm) | G' en Mpa | Tgδ | Volume en cm3 |
|---|---|---|---|---|
| Sous-Couche | 1.6 | 0.2 | 0,06 | 785 |
| Mélange couche M1 | 1.3 | 25 | 0,27 | 342 |
| Mélange couche M2 | 1.3 | 1.7 | 0,25 | 330 |
| Mélange couche M3 | 4.5 | 1.4 | 0,17 | 1331 |

La sous couche posée radialement extérieurement à l'armature de sommet a une épaisseur radiale de 1.6 mm, mesurée sur l'axe de symétrie d'un plan méridien du pneumatique. A cette épaisseur correspond à un volume au tour de roue de 785 cm3.

Un exemple de composition appropriée pour la sous couche est donné dans le tableau suivant :

**[Tableau 2]**

| Sous Couche | |
|---|---|
| Composant | Pce |
| NR^{(a)} | 100 |
| Noir de carbone | 4 |
| 6-PPD^{(b)} | 2.2 |
| DPG^{(c)} | 2.1 |
| ZnO^{(d)} | 1.5 |
| Acide stéarique | 3 |
| Résine | 29.3 |
| HTO^{(e)} | 38 |
| CBS^{(f)} | 1,4 |
| Soufre | 1,6 |

| | |
|---|---|
| Avec : *a. NR : Caoutchouc Naturel* *b. 6-PPD : N-1,3-diméthylbutyl-N'-phényl-p-phénylène-diamine (« Santoflex 6-PPD » de la société Flexsys) - antioxydant* *c. DPG : Diphénylguanidine (« Perkacit » DPG de la société Flexsys) - activateur vulcanisation* *d. ZnO : Oxyde de Zinc, Vulcanisation* *e. HTO : Huile de tournesol à 85 % en poids d'acide oléique, « Lubrirob Tod 1880 » de la société Novance - plastifiant* *f. CBS : N-cyclohexyl-2-benzothiazyl-sulfénamide (Santocure CBS de la société Flexsys) - accélérateur vulcanisation* | |

Avec une telle composition, la sous couche a un module de rigidité de cisaillement de 0.45 Mpa, et une perte viscoélastique de 0,06. La sous couche est optimisée en hystérèse pour contribuer à l'atteinte de la cible performance en résistance au roulement.

La première couche M1 de la bande de roulement posée radialement extérieurement sur la sous couche a une épaisseur de 1.3 mm, mesurée sur l'axe de symétrie d'un plan méridien du pneumatique, ce qui représente un volume de 342 cm3.

Un exemple de composition pour la première couche M1 est dans le tableau suivant :

**[Tableau 3]**

| Couche M1 | |
|---|---|
| Composant | Pce |
| NR^{(a)} | 100 |
| Noir de carbone | 70 |
| Résine Formophénolique | 12 |
| 6-PPD^{(b)} | 2.5 |
| Soufre | 3 |
| ZnO^{(c)} | 3 |
| Acide stéarique | 2 |
| CBS ^{(d)} | 2 |
| HTMT^{(e)} | 4 |
| Soufre | 3 |

| | |
|---|---|
| Avec : *a. NR : Caoutchouc Naturel* *b. 6-PPD : N-1,3-diméthylbutyl-N'-phényl-p-phénylène-diamine (« Santoflex 6-PPD » de la société Flexsys) - antioxydant* *c. ZnO : Oxyde de Zinc, Vulcanisation* *d. CBS : N-cyclohexyl-2-benzothiazyl-sulfénamide (Santocure CBS de la société Flexsys) - accélérateur vulcanisation* *e. HTMT : Résine* | |

Le module de rigidité de cisaillement du mélange élastomérique de la première couche M1 est de 25 Mpa, pour une perte viscoélastique mesurée par une valeur de Tgδ de 0,27.

La couche intermédiaire M2 de la bande de roulement posée radialement extérieurement à la première couche M1 a une épaisseur radiale de 1.3 mm, mesurée sur l'axe de symétrie d'un plan méridien. Le volume de la couche intermédiaire M2 est de 330 mm3. Un exemple de composition pour cette couche est :

**[Tableau 4]**

| Couche M2 | |
|---|---|
| Composant | pce |
| SBR (a) | 100 |
| Silice (b) | 110 |
| Agent de couplage (c) | 9 |
| Plastifiant liquide (d) | 20 |
| Plastifiant résine (e) | 50 |
| Noir | 5 |
| Oxyde de zinc | 3 |
| Acide stéarique | 2 |
| Antioxydant (f) | 2 |
| Accélérateur (g) | 2 |
| DPG | 2 |
| Soufre | 1 |

| | |
|---|---|
| Avec : *(a) SBR avec 27% styrène, butadiène -1,2 :5%, cis-1,4 :15%, trans -1,4: 80% Tg - 48°C* *(b) Silice « Zeosil1165MP » de la société Solvay de surface BET 160m2*/*g* *(c) Silane TESPT « SI69 » de la société Evonik* *(d) Huile TDAE « Flexon 630 » de la société Shell* *(e) Résine « Escorez 2173 » de la société Exxon* *(f) Antioxydant « Santoflex 6PPD » de la société Solutia* *(g) Accélérateur « Santocure CBS » de la société Solutia* | |

Avec une telle composition, le module de rigidité de cisaillement est de 1.7 Mpa, et la perte viscoélastique est de Tgδ de 0,25.

Le module de rigidité de cisaillement de la première couche M1 est égal à environ 15 fois celui de la couche intermédiaire M2, et les pertes viscoélastiques sont du même ordre de grandeur. La couche intermédiaire M2 est destinée à venir en contact avec le sol, un mélange relativement souple, et une forte hystérèse sont attendus pour une bonne performance d'adhérence sur sol mouillé.

Enfin, la couche la plus radialement extérieure M3 de la bande de roulement du pneumatique de l'invention est radialement extérieurement posée sur la couche intermédiaire M2 a une épaisseur radiale de 4,5 mm, mesurée sur l'axe de symétrie d'un plan méridien. Son volume au tour de roue de 131 cm3. Son module de rigidité de cisaillement est de 1.4 Mpa, et la perte viscoélastique Tgδ_M3 est de 17%. Un exemple de composition pour cette couche est :

**[Tableau 5]**

| Couche M3 | |
|---|---|
| Composant | Pce |
| SBR (a) | 100 |
| Silice (b) | 70 |
| Agent de couplage (c) | 6 |
| Plastifiant liquide (d) | 30 |
| Plastifiant résine (e) | 0 |
| Noir de carbone | 5 |

| | |
|---|---|
| Avec : *(a) SBR avec 27% styrène, butadiène -1,2 :5%, cis-1,4 :15%, trans -1,4: 80% Tg - 48°C* *(b) Silice « Zeosil1165MP » de la société Solvay de surface BET 160m2*/*g* *(c) Silane TESPT « SI69 » de la société Evonik* *(d) Huile TDAE « Flexon 630 » de la société Shell* *(e) Résine « Escorez 2173 » de la société Exxon* | |

On vérifie aisément que le pneumatique testé est conforme aux caractéristiques principales de l'invention :
- le rapport G'_M1/G'_M2 est compris dans l'intervalle [7; 25];
- le rapport de l'épaisseur de la couche (M3) divisé par l'épaisseur de la couche (M2), Epaisseur _M3/Epaisseur_M2,est compris dans l'intervalle [3; 10];
- la perte viscoélastique Tgδ_M2 du matériau de la couche (M2), et la perte viscoélastique Tgδ_M3 du matériau de la couche (M3), sont reliées par la relation : (Tgδ_M2 - Tgδ_M3)/ Tgδ_M2 ≥ 20%.

La bande de roulement avec les trois couches M1, M2, et M3 a été obtenue par un procédé de coextrusion volumique qui permet d'extruder simultanément les trois couches. Un tel procédé est décrit dans le brevet WO2018087467A1.

Les inventeurs ont observé un gain en adhérence sur sol mouillé en fin de vie du pneumatique amélioré de 5% contre une perte en résistance de 0,06Kg/t. La simulation de l'usure des pneumatiques témoin et de l'invention a été réalisée par le rabotage de la bande de roulement des pneumatiques tests et témoin tel que décrit dans le brevet FR3059421A1.

## Revendications

1. Pneumatique (1) comportant une armature de sommet (50), une sous-couche (30), et une bande de roulement multicouche (20) formée de trois couches de mélanges élastomériques (M1, M2, M3), dont la couche la plus radialement extérieure (M3) est destinée à entrer en contact avec un sol par l'intermédiaire d'une surface de roulement (10) :
- l'armature de sommet (50) étant disposée radialement intérieurement à la bande de roulement multicouche (20);
- la sous-couche (30) étant disposée radialement extérieurement à l'armature de sommet (50) et radialement intérieurement à la bande de roulement multicouche (20), et s'étendant sur toute la largeur axiale de l'armature de sommet (50) ;
- la bande de roulement multicouche (20) comprenant une première couche (M1) disposée radialement extérieurement à la sous-couche (30) et s'étendant axialement sur toute ou partie de la largeur axiale de la sous-couche (30) au moins en tronçons ;
- la bande de roulement comprenant également une couche (M3) la plus radialement extérieure dotée d'une surface de roulement (10);
- la bande de roulement multicouche (20) comportant une couche intermédiaire (M2) disposée radialement extérieurement à la première couche (M1) en contact avec elle, et radialement intérieurement à la couche (M3), s'étendant axialement au moins en tronçons le long de la couche (M1);
- les mélanges élastomériques de la première couche (M1), la couche intermédiaire (M2), la couche la plus radialement extérieure (M3) destinée à être en contact avec un sol, ayant respectivement un module de rigidité de cisaillement, G'_M1, G'_M2, G'_M3, et ayant respectivement une perte viscoélastique Tgδ_M1, Tgδ_M2, Tgδ_M3, mesurés à 23°C à 10 Hz et sous une déformation de cisaillement alterné de 10% du matériau de chaque couche,
**Caractérisé en ce que,**
le rapport G'_M1/G'_M2 est compris dans l'intervalle [7; 25];
la perte viscoélastique Tgδ_M2 du mélange élastomérique de la couche intermédiaire (M2), et la perte viscoélastique Tgδ_M3 du mélange élastomérique de la couche (M3) la plus radialement extérieure, sont reliées par la relation : (Tgδ_M2-Tgδ_M3)/Tgδ_M2 ≥ 20% ;
le rapport de l'épaisseur radiale de la couche (M3) la plus radialement extérieure divisée par l'épaisseur radiale de la couche intermédiaire (M2), Epaisseur_M3/Epaisseur_M2, est compris dans l'intervalle [3; 10], lesdites épaisseurs étant mesurées sur l'axe de symétrie d'un plan méridien du pneumatique.

2. Pneumatique (1) selon la revendication 1, **caractérisé en ce que** le rapport du module de rigidité de cisaillement du mélange élastomérique de la première couche (M1), divisé par le module de rigidité de cisaillement du mélange élastomérique de la couche radialement la plus extérieure (M3), G'_M1/G'_M3 est compris dans l'intervalle [7; 25].

3. Pneumatique (1) selon la revendication précédente, **dans lequel** le module de rigidité de cisaillement du mélange élastomérique de la sous-couche (30) est inférieur ou égal à 1.5 MPa.

4. Pneumatique (1) selon l'une des revendications précédentes, **caractérisé en ce que** la perte viscoélastique Tgδ_M2 du mélange élastomérique de la couche intermédiaire (M2) est supérieure ou égale à 0,2.

5. Pneumatique (1) selon l'une des revendications précédentes, **caractérisé en ce que** la perte viscoélastique Tgδ_M2 du mélange élastomérique de la couche intermédiaire (M2), et la perte viscoélastique Tgδ_M3 du mélange élastomérique de la couche la plus radialement extérieure M3, sont reliées par la relation : (Tgδ_M2 - Tgδ_M3)/Tgδ_M2 ≥ 30%.

6. Pneumatique (1) selon la revendication 1, **caractérisé en ce que** le module de rigidité de cisaillement G'_M1 du mélange élastomérique de la première couche (M1) est supérieur à 7 MPa.

7. Pneumatique (1) selon la revendication précédente, **caractérisé en ce que** le module de rigidité de cisaillement G'_M1 du mélange élastomérique de la première couche (M1) est supérieur ou égal à 12 MPa.

8. Pneumatique (1) selon l'une des revendications précédentes, le profil raboté de la bande de roulement étant par convention, défini tel que la hauteur de sculpture résiduelle après rabotage soit de 2mm sur toute la largeur axiale de la bande de roulement, l'écart maximal Emax étant la distance radiale entre le profil raboté de la bande de roulement, et le profil radialement extérieur de la première couche (M1) **caractérisé en ce que** l'écart maximal Emax est constant à ± 5 mm sur au moins une portion centrale de la bande de roulement.

9. Pneumatique (1) selon l'une des revendications précédentes, les sillons (80) de la bande de roulement étant les rainures les plus profondes de la sculpture, **dans lequel** le matériau apparaissant en fond de sillons est le même matériau que le matériau constitutif de la couche la plus radialement extérieure (M3) de la bande de roulement.

10. Pneumatique (1) selon l'une des revendications précédentes, **caractérisé en ce que** la couche intermédiaire (M2) disposée radialement extérieurement à la première couche (M1), et en contact radialement intérieurement avec la couche la plus radialement extérieure (M3), s'étend axialement en continue le long de la première couche (M1).

11. Pneumatique (1) selon l'une des revendications précédentes, la bande de roulement (10) comportant des blocs de sculpture (25) séparés par des sillons (80) orientés essentiellement circonférentiellement, **caractérisé en ce que** la première couche (M1) est, axialement en regard de certains blocs de sculpture (25), prolongée radialement vers l'extérieur par au moins un élément renforçant (27) s'étendant radialement de la surface radialement extérieure de la première couche (M1) vers l'extérieur de la bande de roulement (10) jusqu'à une hauteur radiale supérieure à 75% de l'épaisseur radiale de la bande de roulement, ledit élément renforçant (27) étant de largeur axiale variable, depuis une valeur maximale inférieure à 50% de la largeur axiale dudit bloc de sculpture (25), ladite largeur axiale allant en décroissant lorsque l'on se déplace radialement vers le haut.

## Patentansprüche

1. Reifen (1), umfassend eine Gürtelverstärkung (50), eine Unterschicht (30) und einen mehrschichtigen Laufstreifen (20), der aus drei Schichten aus Elastomermischungen (M1, M2, M3) gebildet wird, von denen die radial äußerste Schicht (M3) dazu bestimmt ist, über eine Lauffläche (10) mit einem Boden in Kontakt zu gelangen:
- wobei die Gürtelverstärkung (50) radial innerhalb des mehrschichtigen Laufstreifens (20) angeordnet ist;
- wobei die Unterschicht (30) radial außerhalb der Gürtelverstärkung (50) und radial innerhalb des mehrschichtigen Laufstreifens (20) angeordnet ist und sich über die gesamte axiale Breite der Gürtelverstärkung (50) erstreckt;
- wobei der mehrschichtige Laufstreifen (20) eine erste Schicht (M1) beinhaltet, die radial außerhalb der Unterschicht (30) angeordnet ist und sich zumindest abschnittsweise axial über die gesamte oder einen Teil der axialen Breite der Unterschicht (30) erstreckt;
- wobei der Laufstreifen auch eine radial äußerste Schicht (M3) beinhaltet, die mit einer Lauffläche (10) versehen ist;
- wobei der mehrschichtige Laufstreifen (20) eine Zwischenschicht (M2) umfasst, die radial außerhalb der ersten Schicht (M1) in Kontakt mit ihr und radial innerhalb der Schicht (M3) angeordnet ist und sich zumindest abschnittsweise entlang der Schicht (M1) erstreckt;
- wobei die Elastomermischungen der ersten Schicht (M1), der Zwischenschicht (M2), der radial äußersten Schicht (M3), die dazu bestimmt ist, mit einem Boden in Kontakt zu gelangen, einen Scherfestigkeitsmodul G'_M1, G'_M2 bzw. G'_M3 aufweisen und einen viskoelastischen Verlust Tgδ_M1, Tgδ_M2 bzw. Tgδ_M3 aufweisen, die bei 23 °C bei 10 Hz und unter einer Scherwechselverformung von 10 % des Materials jeder Schicht gemessen werden,
**dadurch gekennzeichnet, dass**
das Verhältnis G'_M1/G'_M2 in dem Intervall [7; 25] enthalten ist;
der viskoelastische Verlust Tgδ_M2 der Elastomermischung der Zwischenschicht (M2) und der viskoelastische Verlust Tgδ_M3 der Elastomermischung der radial äußersten Schicht (M3) durch die folgende Gleichung verbunden sind: (Tgδ _M2-Tgδ_M3)/Tgδ_M2 ≥ 20 %;
das Verhältnis der radialen Dicke der radial äußersten Schicht (M3), dividiert durch die radiale Dicke der Zwischenschicht (M2), Dicke_M3/Dicke_M2, in dem Intervall [3; 10] enthalten ist, wobei die Dicken auf der Symmetrieachse einer Meridianebene des Reifens gemessen werden.

2. Reifen (1) nach Anspruch 1, **dadurch gekennzeichnet, dass** das Verhältnis des Scherfestigkeitsmoduls der Elastomermischung der ersten Schicht (M1), dividiert durch den Scherfestigkeitsmodul der Elastomermischung der radial äußersten Schicht (M3), G'_M1/G'_M3, in dem Intervall [7; 25] enthalten ist.

3. Reifen (1) nach dem vorhergehenden Anspruch, wobei der Scherfestigkeitsmodul der Elastomermischung der Unterschicht (30) kleiner als oder gleich 1,5 MPa ist.

4. Reifen (1) nach einem der vorhergehenden Ansprüche, **dadurch gekennzeichnet, dass** der viskoelastische Verlust Tgδ_M2 der Elastomermischung der Zwischenschicht (M2) größer als oder gleich 0,2 ist.

5. Reifen (1) nach einem der vorhergehenden Ansprüche, **dadurch gekennzeichnet, dass** der viskoelastische Verlust Tgδ_M2 der Elastomermischung der Zwischenschicht (M2) und der viskoelastische Verlust Tgδ_M3 der Elastomermischung der radial äußersten Schicht M3 durch die folgende Gleichung verbunden sind: (Tgδ_M2 - Tgδ_M3)/Tgδ_M2 ≥ 30 %.

6. Reifen (1) nach Anspruch 1, **dadurch gekennzeichnet, dass** der Scherfestigkeitsmodul G'_M1 der Elastomermischung der ersten Schicht (M1) größer als 7 MPa ist.

7. Reifen (1) nach dem vorhergehenden Anspruch, **dadurch gekennzeichnet, dass** der Scherfestigkeitsmodul G'_M1 der Elastomermischung der ersten Schicht (M1) größer als oder gleich 12 MPa ist.

8. Reifen (1) nach einem der vorhergehenden Ansprüche, wobei das abgehobelte Profil des Laufstreifens konventionshalber so definiert ist, dass die Restprofilhöhe nach dem Abhobeln über die gesamte axiale Breite des Laufstreifens 2 mm beträgt, wobei die maximale Abweichung Emax der radiale Abstand zwischen dem abgehobelten Profil des Laufstreifens und dem radial äußeren Profil der ersten Schicht (M1) ist, **dadurch gekennzeichnet, dass** die maximale Abweichung Emax über mindestens einen zentralen Abschnitt des Laufstreifens auf ± 5 mm konstant ist.

9. Reifen (1) nach einem der vorhergehenden Ansprüche, wobei die Rillen (80) des Laufstreifens die tiefsten Nuten des Profilblocks sind, wobei das am Rillenboden erscheinende Material das gleiche Material ist wie das Material, aus dem die radial äußerste Schicht (M3) des Laufstreifens besteht.

10. Reifen (1) nach einem der vorhergehenden Ansprüche, **dadurch gekennzeichnet, dass** die Zwischenschicht (M2), die radial außerhalb der ersten Schicht (M1) angeordnet ist und radial innerhalb mit der radial äußersten Schicht (M3) in Kontakt ist, sich axial durchgehend entlang der ersten Schicht (M1) erstreckt.

11. Reifen (1) nach einem der vorhergehenden Ansprüche, wobei der Laufstreifen (10) Profilblöcke (25) umfasst, die durch im Wesentlichen umfänglich ausgerichtete Rillen (80) getrennt sind, **dadurch gekennzeichnet, dass** die erste Schicht (M1), axial gegenüber einigen Profilblöcken (25), radial nach außen durch mindestens ein verstärkendes Element (27) verlängert wird, das sich radial von der radial äußeren Fläche der ersten Schicht (M1) nach außerhalb des Laufstreifens (10) bis zu einer radialen Höhe von mehr als 75 % der radialen Dicke des Laufstreifens erstreckt, wobei das verstärkende Element (27) eine variable axiale Breite ausgehend von einem Höchstwert von weniger als 50 % der axialen Breite des Profilblocks (25) hat, wobei die axiale Breite radial nach oben hin abnimmt.

## Claims

1. Tyre (1) having a crown reinforcement (50), an underlayer (30), and a multilayer tread (20) formed by three layers of elastomeric compounds (M1, M2, M3), the radially outermost layer (M3) of which is intended to come into contact with the ground via a tread surface (10):
- the crown reinforcement (50) being disposed radially on the inside of the multilayer tread (20);
- the underlayer (30) being disposed radially on the outside of the crown reinforcement (50) and radially on the inside of the multilayer tread (20), and extending over the entire axial width of the crown reinforcement (50);
- the multilayer tread (20) comprising a first layer (M1) disposed radially on the outside of the underlayer (30) and extending axially over all or part of the axial width of the underlayer (30), at least in portions;
- the tread also comprising a radially outermost layer (M3) provided with a tread surface (10);
- the multilayer tread (20) has an intermediate layer (M2) disposed radially on the outside of the first layer (M1) in contact with it, and radially on the inside in contact with the radially outermost layer (M3), extending axially along the first layer (M1) at least in portions,
- the elastomeric compounds of the first layer (M1), the intermediate layer (M2), the radially outermost layers (M3) having respectively a modulus of shear stiffness G'(M1), G'(M2), G'(M3), and having respectively a viscoelastic loss Tgδ(M1), Tgδ(M2), Tgδ(M3), measured at 23°C at 10 Hz and under an alternating shear stress of 10% of the material of each layer,
**characterized in that**
the ratio G'(M1)/G'(M2) is within the range [7; 25];
The viscoelastic loss Tgδ (M2) of the elastomeric compound of the intermediate layer (M2), and the viscoelastic loss Tgδ (M3) of the elastomeric compound of the radially outermost layer (M3), are linked by the following relationship: (Tgδ (M2)-Tgδ (M3))/Tgδ (M2) ≥ 20%;
the ratio of the radial thickness of the radially outermost layer (M3) divided by the radial thickness of the intermediate layer (M2), Thickness (M3)/Thickness (M2), is within the range [3; 10], said thicknesses being measured along the axis of symmetry of a meridian plane of the tyre.

2. Tyre (1) according to Claim 1, **characterized in that** the ratio of the modulus of shear stiffness of the elastomeric compound of the first layer (M1), divided by the modulus of shear stiffness of the elastomeric compound of the radially outermost layer (M3), G'(M1)/G'(M3) is within the range [7; 25].

3. Tyre (1) according to the preceding claim, wherein the modulus of shear stiffness of the elastomeric compound of the underlayer (30) is less than or equal to 1.5 MPa.

4. Tyre (1) according to one of the preceding claims, **characterized in that** the viscoelastic loss Tgδ(M2) of the elastomeric compound of the intermediate layer (M2) is greater than or equal to 0.2.

5. Tyre (1) according to one of the preceding claims, **characterized in that** the viscoelastic loss Tgδ(M2) of the elastomeric compound of the intermediate layer (M2), and the viscoelastic loss Tgδ(M3) of the elastomeric compound of the radially outermost layer M3, are linked by the following relationship: (Tgδ(M2) - Tgδ(M3))/Tgδ(M2) ≥ 30%.

6. Tyre (1) according to Claim 1, **characterized in that** the modulus of shear stiffness G'(M1) of the elastomeric compound of the first layer (M1) is greater than 7 MPa.

7. Tyre (1) according to the preceding claim, **characterized in that** the modulus of shear stiffness G'(M1) of the elastomeric compound of the first layer (M1) is greater than or equal to 12 MPa.

8. Tyre (1) according to one of the preceding claims, the planed-down profile of the tread being by convention, defined such that the tread pattern height remaining after planing-down is 2 mm over the entire axial width of the tread, the maximum difference Emax being the radial distance between the planed-down profile of the tread, and the radially outer profile of the first layer (M1), **characterized in that** the maximum difference Emax is constant, ± 5 mm, over at least a central portion of the tread.

9. Tyre (1) according to one of the preceding claims, the furrows (80) of the tread being the deepest grooves of the tread pattern, wherein the material appearing at the bottom of the furrows is the same material as the material of which the radially outermost layer (M3) of the tread is made.

10. Tyre (1) according to one of the preceding claims, **characterized in that** the intermediate layer (M2), which is disposed radially on the outside of the first layer (M1) and is in contact with the radially outermost layer (M3), extends axially continuously along the first layer (M1).

11. Tyre (1) according to one of the preceding claims, the tread (10) having tread pattern blocks (25) that are separated by furrows (80) oriented substantially circumferentially, **characterized in that** the first layer (M1), axially next to some tread pattern blocks (25), is extended radially outwards by at least one reinforcing element (27) extending radially from the radially outer surface of the layer (M1) towards the outside of the tread (10) to a radial height greater than 75% of the radial thickness of the tread, said reinforcing element (27) having a variable axial width, from a maximum value less than 50% of the axial width of said tread pattern block (25), said axial width decreasing radially upwardly.
